# EUROPEAN PATENT APPLICATION

(11) **EP 1 345 139 A1**
(43) Date of publication of application: **17.09.2003**
(21) Application number: 01271119.8
(22) Date of filing: 17.12.2001
(51) Int. Cl.: G06F 17/60

(54) **PAYMENT STATEMENT ISSUING SYSTEM AND CHARGE PAYING SYSTEM**

(30) Priority: 18.12.2000 JP 2000383294; 27.12.2000 JP 2000398679; 11.12.2001 JP 2001377410
(71) Applicant: Kunugi, Takanobu, Tokorozawa-shi, Saitama 359-0024 (JP); Kunugi, Yurako, Tokorozawa-shi, Saitama 359-0024 (JP)
(72) Inventor: Kunugi, Takanobu, Tokorozawa-shi, Saitama 359-0024 (JP); Kunugi, Yurako, Tokorozawa-shi, Saitama 359-0024 (JP)
(74) Representative: Klunker . Schmitt-Nilson . Hirsch
(86) International application number: JP0111041
(87) International publication number: WO02050735

(57) **Abstract**

A charge payment system 10 comprising: a user database 42 for storing the billing information for each user sent from a local server 18 of a plurality of service providers, while associating the billing information with the user's attribute information, a bill processing unit 50 for retrieving the user database 42 to extract a bill for the user and sending it to a terminal 16 when a display request of the bill is issued from a terminal 16 operated by a user, an issuing unit 33, a ticket processing unit 48 for supplying the necessary information to the issuing unit 33 and printing out a payment sheet 60 corresponding to a specified bill when the information for selecting the bill is supplied from the terminal 16, a received money information output unit 56 for supplying the information indicating that the payment by cash has been completed based on the payment sheet 60, and a payment processing unit 51 for adding the information that the bill has been paid, to the bill stored in the user database 42 when receiving the payment completion information.

## Description

### Technical Field

The present invention relates to a payment sheet issuing system and a charge payment system, and more particularly to a system enabling a user to collectively manage the payment procedure of various public utility charges and the like.

### Background Art

At present, as a general rule, various payment including public utility charges such as electricity rate, gas rate, water rate, telephone rate, and house rent of an apartment building constructed by the Housing Corporation and payment for a credit card company are made by carrying a payment sheet mailed from a service provider to a user every month, to a financial institution or a convenience store and paying the amount billed in cash.

Therefore, service providers such as an electric power company, a gas company, an autonomous body, and the like have to mail the payment sheets to the respective users, which costs a lot. When a user would not pay the charge spontaneously even after the term of payment, it is necessary to mail the payment sheet again together with a letter of collection.

For a user, it is very troublesome to mange a lot of payment sheets in every month because he or she receives various kinds of payment sheets issued by every service provider, which have various payment terms.

For example, when a user tries to pay the amount for several bills collectively just after payday, it may happen that some payment cannot be made because of losing some of the payment sheets.

There can be the case where, after once paying the charge according to the re-issued payment sheet, a user may pay the same charge again according to the original payment sheet.

Alternatively, there is a possibility that the phone line or the electric power supply may be stopped because it proves that some outstanding charges exist prior to the latest payment even if the latest payment has been made.

Therefore, a service provider recommends an automatic debt transfer method from a bank account in order to save the cost of mailing the payment sheets and save a user's trouble of payment.

In order to do so, however, a user must perform the transfer requesting procedure for every service provider in a bank and he or she must be always careful about the funds in his or her bank account in order to prevent from shortage funds. There may occur psychological reaction against automatic withdrawal of a lot of money, without a user's knowledge and check of the bill details. Therefore, payment of charges by the automatic withdrawal is not popular at present.

This invention is to solve the above problem in the conventional payment of charges and aims to realize a system capable of reducing the mailing cost of the payment sheets on the side of a service provider and enhancing convenience in the management of the payment term on the side of a user.

### Disclosure of the Invention

In order to solve the above object, a payment sheet issuing system according to the invention comprises: storing means for storing billing information for each user which is sent from a server of a service provider, while associating the above information with attribute information of the user; means for searching within the above storing means to extract a bill for a user and sending the bill to a terminal when a display request of the bill is issued from the terminal operated by the user; issuing means (printing machine such as a printer); and means for supplying necessary information to the issuing means, so as to print out a payment sheet corresponding to a specified bill when information for selecting the bill is supplied from the terminal.

The above "terminal operated by the user" widely includes a personal computer, a portable phone, a PDA (personal digital assistant), an exclusive terminal, and the like.

Since the bills from the respective service providers are stored in the storing means, associated with the respective users, a user can confirm various bills for himself or herself at one time by issuing a display request of the bills through the terminal. Therefore, it has the advantage that a user can manage the payment terms and make the payment plan for the various bills easily.

Further, if a user desires a hard copy, the payment sheet copy as for the corresponding bill can be printed and issued at that site from the issuing means, and therefore, a service provider can save the trouble and the cost of mailing the payment sheets to the respective users. While, a user doesn't have to keep the payment sheet until the due-date for payment advantageously.

Having received the payment sheet as mentioned above, a user can carry this payment sheet to a nearby convenience store or financial institution and pay the money.

A first charge payment system according to the invention comprises: storing means for storing billing information for each user which is sent from a server of a service provider, while associating the above information with attribute information of the user; means for searching within the above storing means to extract a bill for a user and sending the bill to a terminal when a display request of the bill is issued from the terminal operated by the user; an issuing unit; means for supplying necessary information to the issuing unit, so as to print out a payment sheet corresponding to a specified bill when information for selecting the bill is supplied from the terminal; means for supplying information indicating that the bill has been paid in cash, by credit card, pre-paid card, or the other electric money, according to the payment sheet; and means for processing the bill stored in the storing means as already-paid item when receiving the above payment completion information. Here, "processing the bill as already-paid item" means, for example, that the information that it has been paid is added to the corresponding bill. Alternatively, the information about the corresponding bill may be deleted from the storing means.

A second charge payment system according to the invention comprises: storing means for storing billing information for each user which is sent from a server of a service provider, while associating the above information to attribute information of the user; means for searching within the above storing means to extract a bill for a user and sending the bill to a terminal when a display request of the bill is issued from the terminal operated by the user; means for sending a message inducing a user to enter money for the amount of a specified bill, to the terminal, when information for selecting the bill is supplied from the terminal; a cash handling unit; means for recognizing the amount of the money entered into the above cash handling unit and supplying information indicating that the money for the above amount has been entered; and means for processing the bill stored in the storing means as already-paid item when receiving the above information of the cash payment completion.

In this case, since the money is transferred and received through the cash handling unit, the payment sheet itself is not necessary.

A third charge payment system according to the invention comprises: storing means for storing billing information for each user which is sent from a server of a service provider, while associating the above information to attribute information of the user; means for searching within the above storing means to extract a bill for a user and sending the bill to a terminal when a display request of the bill is issued from the terminal operated by the user; means for sending a message inducing a user to pay the amount of a specified bill, to the terminal, when information for selecting the bill is supplied from the terminal; card information input means for entering credit card information or pre-paid card information; means for sending the card information and amount information to a computer system of a card company, so as to check whether a payment by the card is permitted or not, when receiving the credit card information or the pre-paid card information through the card information input means; means for processing the bill stored in the storing means as already-paid item when information of payment completion is sent from the computer system.

The above "card information input means" includes, for example, a card reader for reading out the information recorded in a card. Alternatively, when typing the number of a credit card, expiring data, and the number of a pre-paid card, the means corresponds to a keyboard connected to a computer system. Or, when the above information is represented by a bar code on the surface of a card, it corresponds to a bar code reader.

A fourth charge payment system according to the invention comprises: storing means for storing billing information for each user which is sent from a server of a service provider, while associating the above information to attribute information of the user; means for searching within the above storing means to extract a bill for a user and sending the bill to a terminal when a display request of the bill is issued from the terminal operated by the user; means for sending a message inducing a user to pay the amount of a specified bill, to the terminal, when information for selecting the bill is supplied from the terminal; card information input means for entering debit card information; means for entering a user's secret identification code; means for sending card information, secret identification code, and amount information to a computer system of a financial institution, so as to check whether a payment by the debit card is permitted or not when receiving the card information and the secret identification code through the input means; and means for processing the bill stored in the storing means as already-paid item when information of payment completion is sent from the computer system.

A fifth charge payment system according to the invention comprises: storing means for storing billing information for each user which is sent from a server of a service provider, while associating the above information to attribute information of the user; means for searching within the above storing means to extract a bill for a user and sending the bill to a terminal when a display request of the bill is issued from the terminal operated by the user; means for sending a message inducing a user to pay the amount of a specified bill, to the terminal, when information for selecting the bill is supplied from the terminal; means for entering a user's secret identification code in a financial institution where the user has an account; means for sending the entered secret identification code, amount information, and user's account information to a computer system of the financial institution, so as to check whether a payment through account transfer is permitted or not; and means for processing the bill stored in the storing means as already-paid item when information of payment completion is sent from the computer system.

Each of the above charge payment systems can comprise: storing means for storing detail information about each bill; and means for retrieving the storing means to extract the detail information about a specified bill and sending the above information to the terminal when a display request of the detail information about the bill is issued from the terminal.

As a result, since a user can confirm the details of each bill in advance, he or she can make a payment with confidence.

Each of the charge payment systems can comprises means for calculating a total sum of bills and sending the total to the terminal when information for selecting the bills is issued from the terminal.

Each of the charge payment systems can comprise means for searching within the storing means to extract a bill concerned to a specified service provider, of the bills for the user and sending the same bill to the terminal when information for selecting the service provider is issued from the terminal.

As a result, it is possible to pay, for example, only the electricity charges in the lump.

Each of the charge payment systems can comprise means for sending user's attribute information entered from the terminal to a server of a selected service provider, so as to check whether the user registration is possible or not, when a new user registration request together with a request for selecting the service provider is supplied from the terminal; and means for storing the user into the predetermined storing means while associating the user with the service provider when a positive reply is obtained in the above.

As a result, it is possible to prevent from a mistake of associating a user with a service provider having no concern with the user.

Each of the charge payment systems can comprise: means for updating attribute information entered from the terminal in the storing means when a request for changing the user's attribute information is issued from the terminal; and means for sending the changed attribute information to a server of a service provider selected by the user and requesting update of the user information stored in the storing means managed by the server of the service provider.

As a result, even when, for example, a user's phone number is changed after the user registration into this system, it is not necessary to inform the respective service providers of the above change.

Each of the charge payment systems can comprise: means for displaying a language selection screen provided with a message and a select button requesting selection of a specified language, on the user's terminal; and means for representing at least a bill for the user in the language selected by the user when information for selecting the specified language is supplied from the terminal.

As a result, even when a user uses a language other than Japanese as his or her mother tongue, the user can use this system effectively. Needless to say, it is preferable that the system comprises means for representing various messages sent to a user terminal, as well as a bill and a payment sheet, in a language selected by a user.

### Brief Description of the Drawings

Fig. 1 is an image view showing the whole structure of a charge payment system according to the invention.
Fig. 2 is a block diagram showing the hardware structure of a center server and a terminal.
Fig. 3 is a block diagram showing the functional structure in the case where a user not registered newly performs a user registration into this system.
Fig. 4 is a flow chart showing the processing procedure in the case where a user not registered newly performs a user registration into this system.
Fig. 5 is a layout view showing a new registration form.
Fig. 6 is an explanatory view showing an example of the data items set in the user database.
Fig. 7 is a block diagram showing the functional structure in the case where a user pays various fees using this system.
Fig. 8 is a flow chart showing the processing procedure in the case where a user pays various fees using this system.
Fig. 9 is a layout view showing the structural example of a payment object selection screen.
Fig. 10 is a layout view showing the structural example of an authentication screen.
Fig. 11 is a layout view showing the state with a list of the electricity bills shown on a display.
Fig. 12 is a layout view showing one example of the payment sheet.
Fig. 13 is a layout view showing the state with a list of all the bills as for a user shown on a display.
Fig. 14 is a block diagram showing the functional structure in the case of directly paying cash through a terminal.
Fig. 15 is a flow chart showing the processing procedure in the case of directly paying cash through a terminal.
Fig. 16 is a layout view showing the state with a list of the whole bills as for a user shown on a display.
Fig. 17 is a layout view showing the constitutional example of an amount confirmation screen and a payment method selection screen.
Fig. 18 is a block diagram showing the functional structure in the case of paying the amount billed by using a credit card, a pre-paid card, or a debit card from a terminal.
Fig. 19 is a flow chart showing the processing procedure in the case of paying the amount billed by using a credit card from a terminal.
Fig. 20 is a block diagram showing the functional structure in the case of paying the amount billed by transfer through a bank account from a personal computer.
Fig. 21 is a block diagram showing the functional structure in the case of changing the registered information of a user.
Fig. 22 is a flow chart showing the processing procedure in the case of changing the registered information of a user.
Fig. 23 is a layout view showing the state with a language selection screen shown on a display of a terminal.

### Best Mode for Carrying Out the Invention

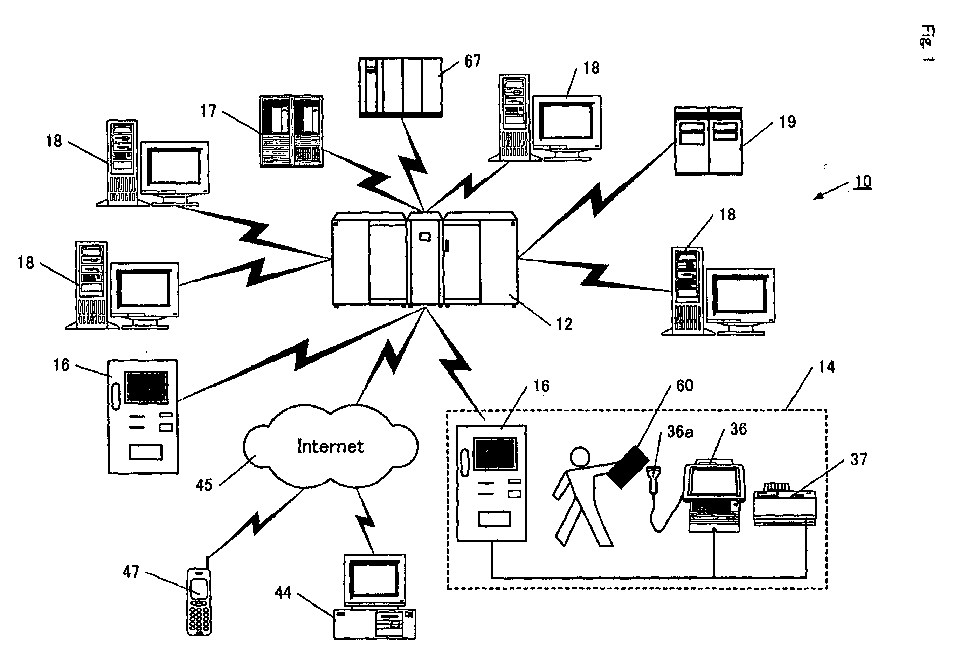

Fig. 1 is a view showing the whole image of a charge payment system 10 according to the invention, which comprises a center server 12 managed by an operator of this system, a terminal 16 provided in a convenience store 14, a host computer 17 managed by a credit card company, a local server 18 managed by various service providers (an electric power company, a gas company, a local government, a telephone company, and the like), a host computer 19 managed by a pre-paid card company, a host computer 67 managed by a financial institution such as a bank, and a personal computer 44 and a portable phone 47 managed by a user.

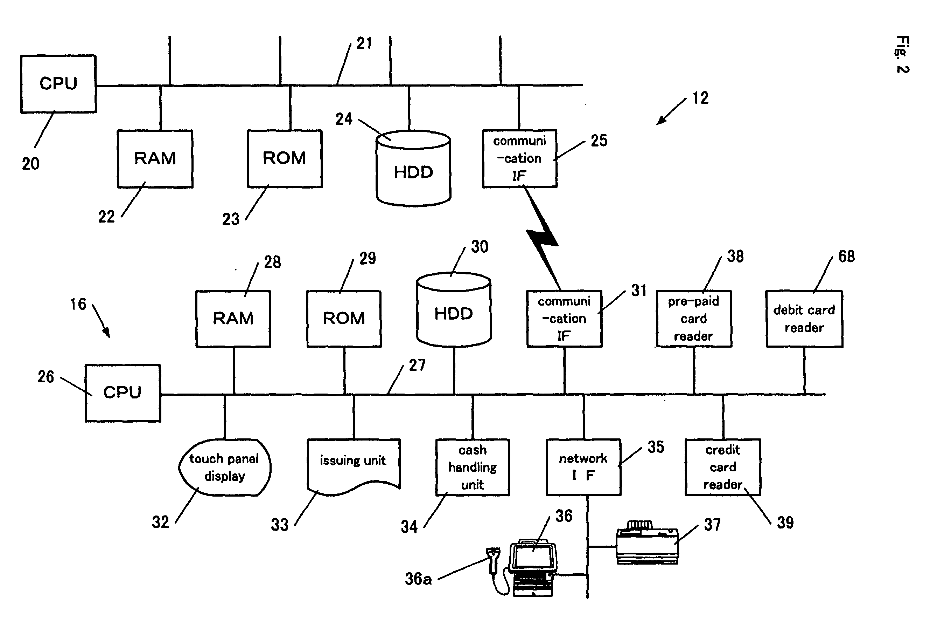

The center server 12 is formed by a computer system such as a main frame and a work station, and as illustrated in Fig. 2, it comprises a CPU 20 and a RAM 22, a ROM 23, a hard disk 24, a communication interface 25 and the like connected to the CPU 20 through a system bus 21.

The terminal 16 is formed by a computer system like a personal computer, and it comprises a CPU 26 and a RAM 28, a ROM 29, a hard disk 30, a communication interface 31, a touch panel display 32, an issuing unit 33, a cash handling unit 34, a network interface 35, a pre-paid card reader 38, a credit card reader 39, a debit card reader 68 and the like connected to the CPU 26 through a system bus 27.

A POS register terminal 36 and a printer 37 provided in the convenience store 14 are connected to the terminal 16 over a LAN through the network interface 35.

The center server 12 is connected to the terminal 16 through the respective communication interfaces 25 and 31 and a communication line on a network.

The local server 18 is formed by a computer system such as a work station, and it comprises a CPU and a RAM, a ROM, a hard disk, a communication interface and the like connected to the CPU through a system bus, though they are not illustrated. The local server 18 is connected to the center server 12 through this communication interface and communication line on a network.

The respective service providers are under contract for business collaboration to the operator of this system in advance.

The host computer 17 of the credit card company, the host computer 19 of the pre-paid card company, and the host computer 67 managed by the financial institution are formed by a computer system such as a main frame, and each of them comprises a CPU and a RAM, a ROM, a hard disk, a communication interface and the like connected to the CPU through a system bus although they are not illustrated. Each host computer is connected to the center server 12 through the communication interface and communication line on a network.

The personal computer 44 managed by the user comprises a CPU and a RAM, a ROM, a hard disk, a communication interface (modem and TA) and the like connected to the CPU through a system bus although they are not illustrated, and it is connected to the center server 12 through the Internet on a network by the dialup connection to the Internet service provider (ISP) through this communication interface.

The portable phone 47 managed by a user has a function of the Internet connection, for example, like the i-mode (registered trademark) of the NTT Docomo, and a dedicated browser program, and it is connected to the center server 12 through a packet exchange network of communication carrier, a gateway server, and the Internet, on a network.

In order to make a payment of various fees through this charge payment system 10, a user has to accomplish the user registration into the system in advance.

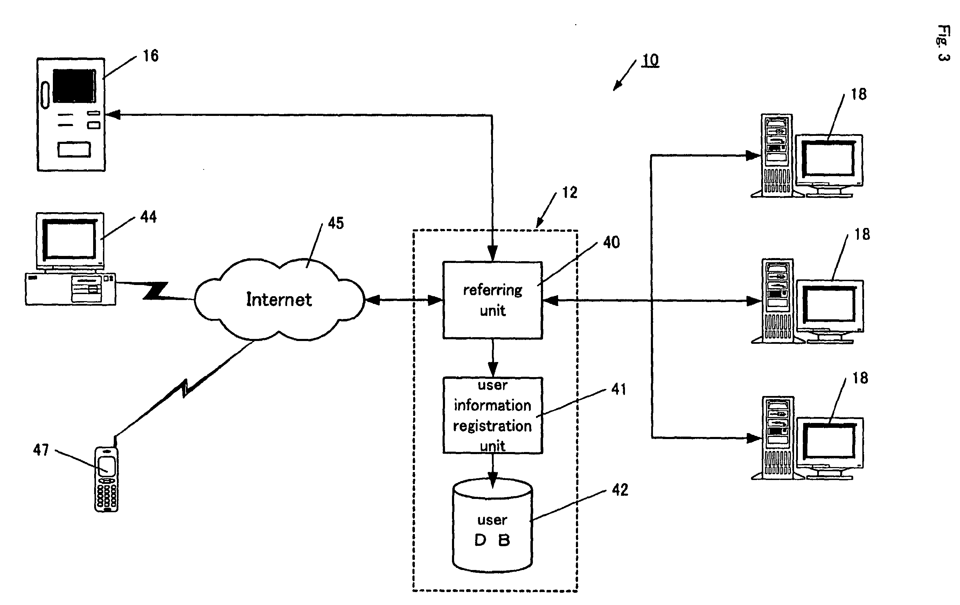

Fig. 3 is a block diagram showing the functional structure in the case of making a new user registration in this system 10, and the center server 12 comprises a referring unit 40, a user information registration unit 41, and a user database 42.

The referring unit 40 and the user information registration unit 41 can be realized by the CPU 20 of the center server 12 executing the predetermined processing according to the OS and the dedicated program.

The user database 42 is stored in the hard disk 24 of the center server 12.

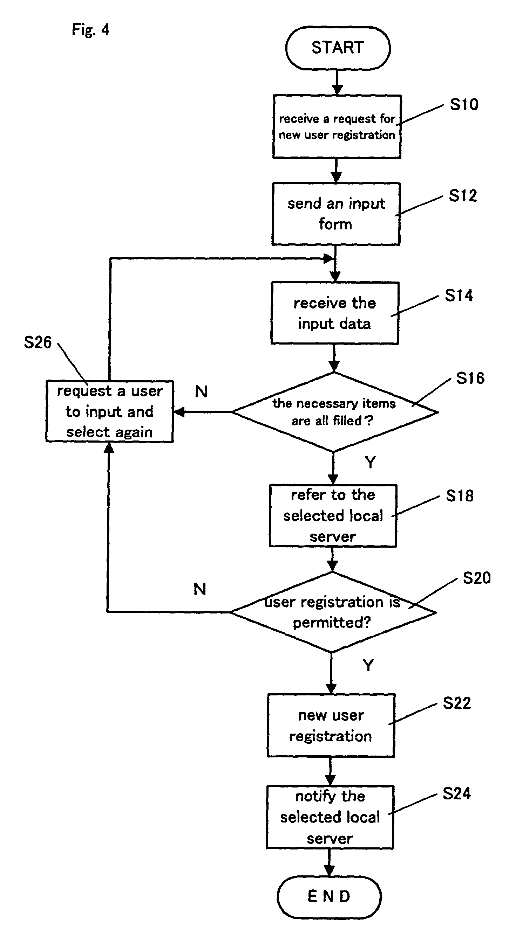

The processing procedure in the case of newly making a user registration of some user not yet registered will be explained, according to the flow chart of Fig. 4.

A user enters a predetermined URL from the web browser program running on the own personal computer 44 and gains access to the web site of the center server 12 through the Internet 45. Then, the user selects "new user registration" from a service menu displayed on the user's personal computer screen.

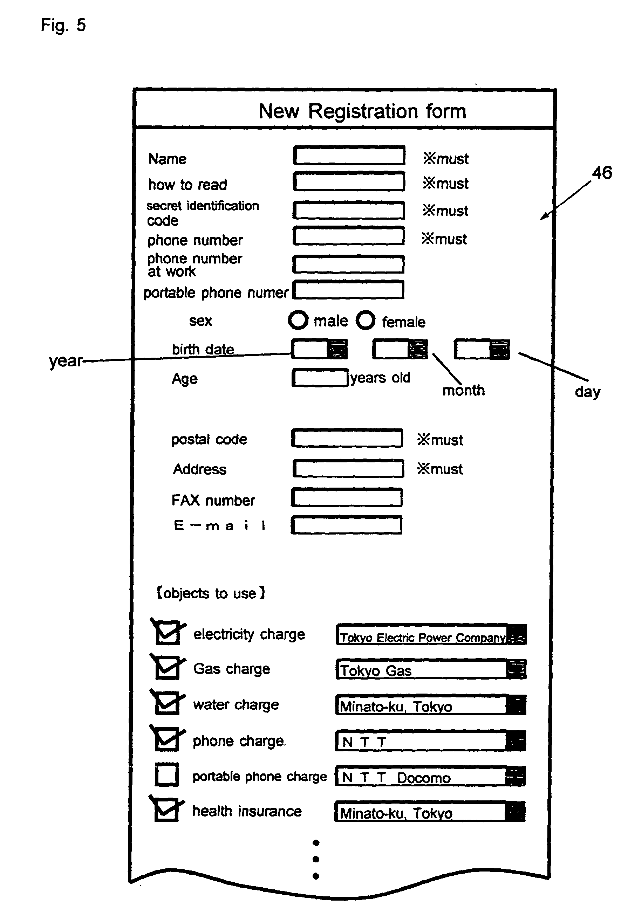

Upon receipt of the above (S10), the center server 12 sends "new registration form 46" shown in Fig. 5, with some data items to be filled at affiliation, to the user's personal computer 12 (S12), and asks a user to enter the using object (service providers) as well as the attribute information such as his or her name, secret identification code, and home telephone number.

After filling in the blank portions of the above form with the necessary items, a user clicks the "send" button, not illustrated, and then the above input data is sent to the center server 12 through the Internet 45.

The center server receives the above data (S14), and the referring unit 40 confirms that all the requisite items have been filled (S16). Then the center server sends the input data to the local servers of the respective service providers selected by a user as the using object and asks each of the local servers whether the user registration is possible or not (S18).

The local server 18 sends the information of asking the center server to get in the charge on behalf of itself, to the referring unit 40 after confirming that it is surely providing the service to the user.

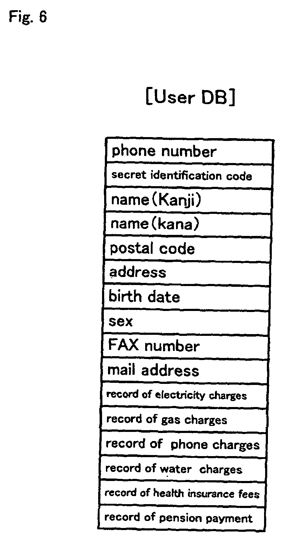

Upon receipt of the reply that the registration is possible (S20), the referring unit 40 hands in the input data from the user to the user information registration unit 41. After associating the attribute information of the user with the using object of the user, the user information registration unit 41 stores the both into the user database 42 (S22). Fig. 6 shows an example of the data items set in the user database 42, where the record of the charges in every service provider is shown together with the phone number, secret identification code, name, address and the like.

After newly registering a user in the user database 42 as mentioned above, the center server 12 sends the data indicating "completion of user registration" to the respective local servers 18 (S24). Thereafter, the respective service providers can eliminate the user from a bill issuing and mailing list, thereby reducing the cost concerned.

When the referring unit 40 finds some shortage within the data sent from a user, a message inducing the user to enter the above again is displayed on the user's personal computer (S26).

Also when the data of "no corresponding user" is sent from the local server 18 of some service provider (S20), a message inducing a user to select again is displayed on the user's personal computer (S26).

In the above, the procedure in the case where a non-registered user makes a new user registration from the personal computer 44 through the Internet 45 has been described, but the other method than the above can be naturally adopted. For example, it is possible to operate the terminal 16 within the convenience store 14 to call the same input form as shown in Fig. 5 on the display 32, hence to touch the button of the key board shape displayed on the screen to enter the requisite items.

Further, it is possible to gain access to the web site from the portable phone 47 with the function of the Internet connection, i-mode (registered trademark) through the Internet 45, hence to enter the same data while operating the ten-key keyboard of the portable phone 47.

Alternatively, it is possible to acquire an application sheet with the same input items as the input form 46 of Fig. 5 in a convenience store, fill the necessary items by hand, and then, send it to the system operator via FAX or mail, although it is not illustrated. In this case, on the side of the system operator, it is necessary to enter the information filled by the user from the keyboard and the like and store it into the user database 42 through the user information registration unit 41.

The user registered into the system 10 as mentioned above can make a payment of various fees through the terminal 16 provided in the convenience store 14.

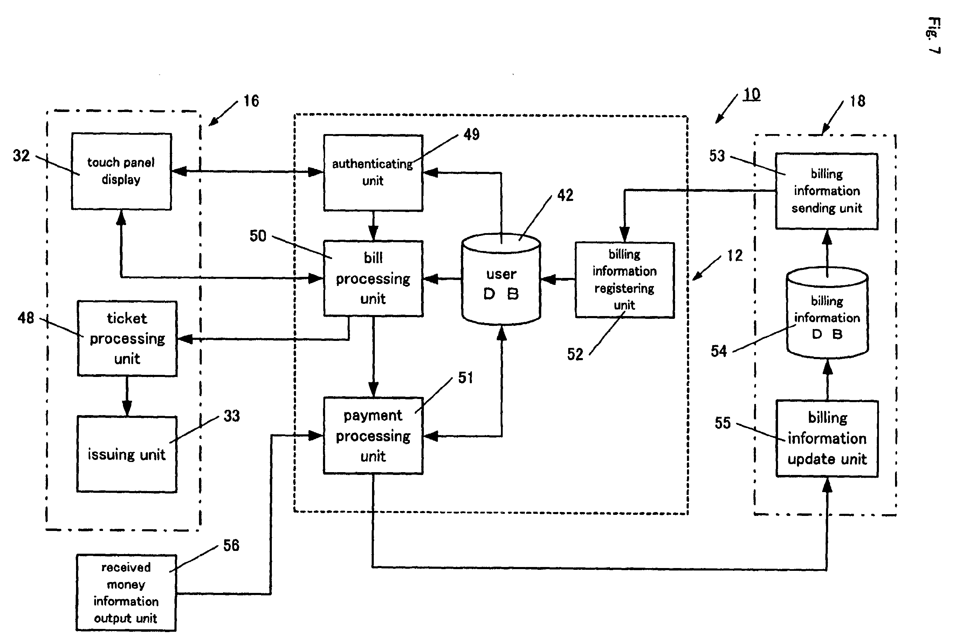

Fig. 7 is a block diagram showing the functional structure in the case where a user actually makes a payment of various fees by using this system 10, and the terminal 16 includes the touch panel display 32, a ticket processing unit 48, and the issuing unit 33. The ticket processing unit 48 can be realized by the CPU 26 of the terminal 16 executing the predetermined processing based on the OS and the dedicated program. The issuing unit 33 has a mechanism of printing and discharging the necessary information according to an instruction from the ticket processing unit 48.

The center server 12 includes an authenticating unit 49, a user database 42, a bill processing unit 50, a payment processing unit 51, and a billing information registering unit 52. The authenticating unit 49, the bill processing unit 50, the payment processing unit 51, and the billing information registering unit 52 can be realized by the CPU 20 of the center server 12 executing the predetermined processing based on the OS and the dedicated program.

The local server 18 of a service provider includes a billing information sending unit 53, a billing information database 54, and a billing information update unit 55. The billing information sending unit 53 and the billing information update unit 55 can be realized by the CPU of the local server 18 executing the predetermined processing based on the OS and the dedicated program. The billing information database 54 is stored into the hard disk of the local server 18.

Although a received money information output unit 56 is illustrated in the drawing, it can be realized by the CPU of the POS register terminal 36 provided in the convenience store 14 executing the predetermined processing based on the OS and the dedicated program.

At least the billing information as for a person registered as a user in the system 10, of all the users of the corresponding service provider, is stored in the billing information database 54 of the local server 18. The "billing information" here indicates the amount billed and the bill detail information as for each user in every month.

The billing information stored in the billing information database 54 is periodically sent to the center server 12 by the billing information sending unit 53.

Upon receipt of this, the center server 12 activates the billing information registering unit 52 to register the data of the respective bills into the corresponding items within the user database 42.

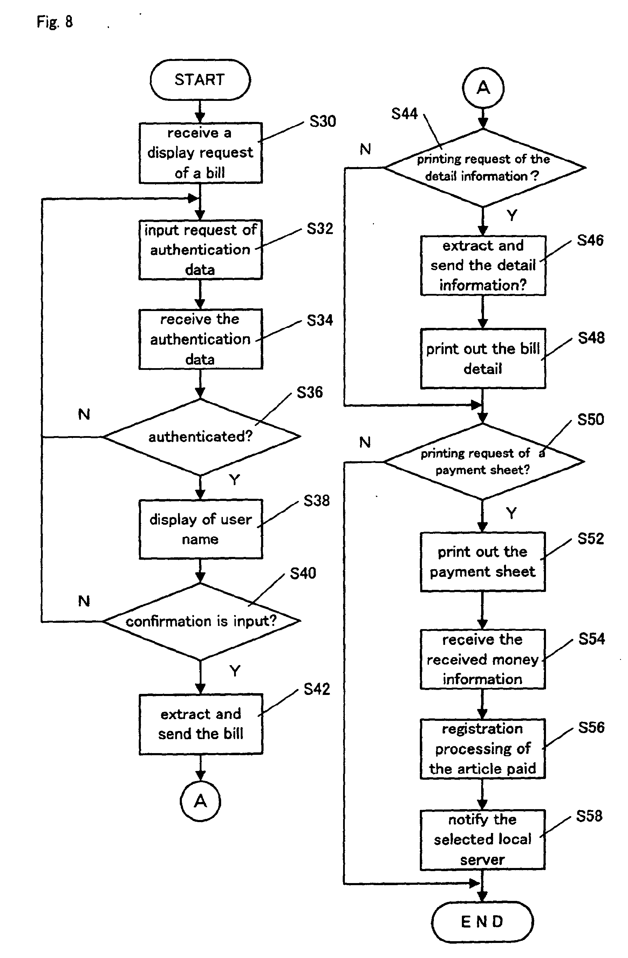

Next, according to the flow chart of Fig. 8, the processing procedure in the case where a user concretely pays the charge through this system will be described.

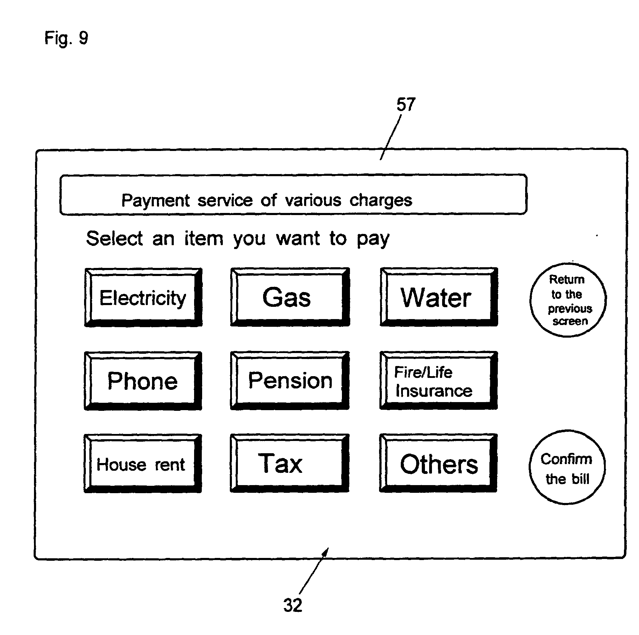

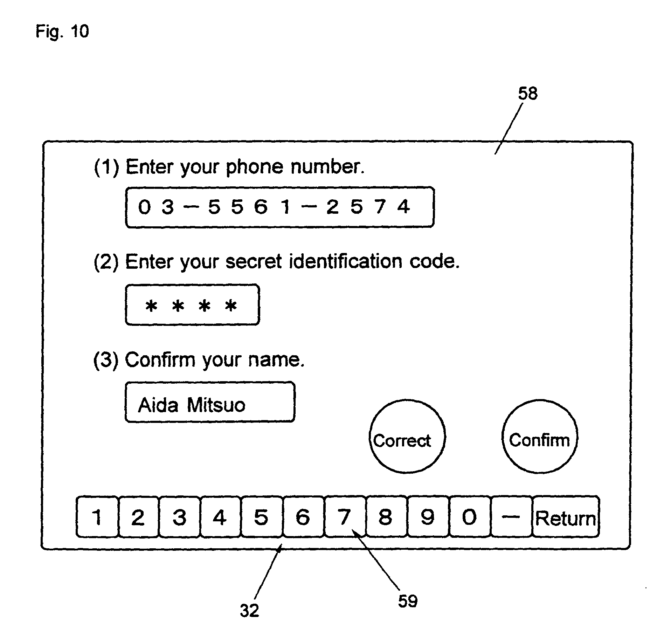

At first, a user goes to the nearby convenience store 14 and operates the touch panel 32 of the terminal 16 to call a payment object selection screen 57 shown in Fig. 9 on the screen. For example, when pushing the "electricity" button to call a screen of the bill about the electricity charge, the authenticating unit 49 of the center server 12, receives the request (S30), sends the data for an authentication screen 58 shown in Fig. 10, and asks the user to enter the authentication data (S32).

In reply to this, the user pushes the ten-key keyboard 59 on the touch panel 32 so as to enter the phone number and the secret identification code. Upon receipt of this (S34), the authenticating unit 49 of the center server 12 retrieves the input phone number as a key from the user database 42 and compares the input secret identification code with the registered secret identification code so as to perform the user authentication (S36).

In the positive case, the name of the user (Aida Mitsuo) is taken out from the user database 42 and shown on the display 32 (S38).

The user who has confirmed that his name was displayed without mistake, pushes the "confirm" button. In the center server 12 having received this (S40), the bill processing unit 50 extracts the bill (not paid) of the electricity charges stored in the user database 42 and sends it to the terminal 16 (S42).

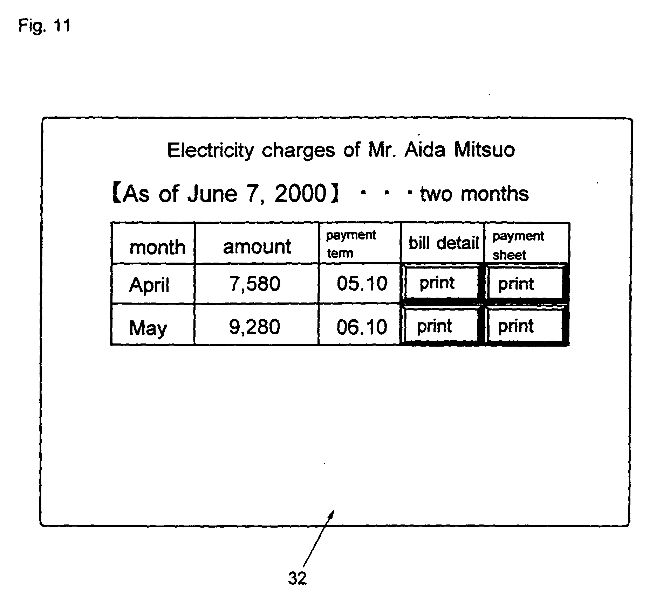

As a result, as illustrated in Fig. 11, the bill of the electricity charge is displayed as a list on the display 32. This case shows that the user (Aida Mitsuo) has not paid the electricity charges for two months yet as of June 7.

Here, when the user wants to check the contents of the bill, he has to push the "print" button of the bill in each month. In the center server 12 upon receipt of this (S44), the bill processing unit 50 extracts the bill detail data within the user database 42 and sends this to the ticket processing unit 48 of the terminal 16 (s46). The issuing unit 33 prints out the bill, not illustrated, according to the printing instruction from the ticket processing unit 48 (S48).

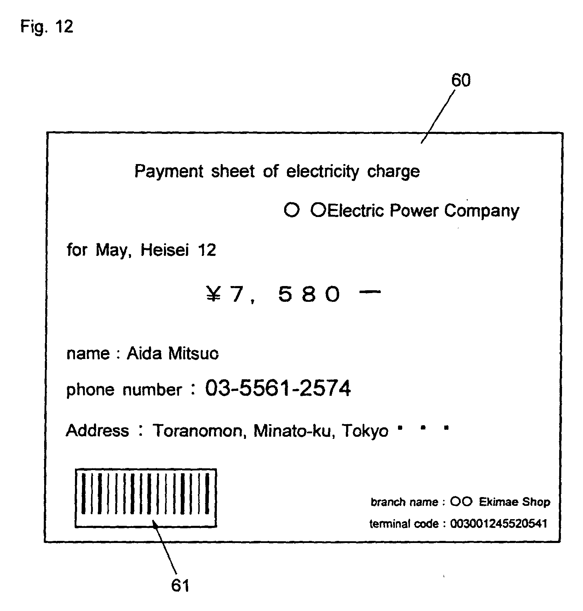

After checking this bill and confirming that there is no mistake, the user pushes the "print" button of the payment form. Upon receipt of the payment form printing request, the bill processing unit 50 extracts the necessary data from the user database 42, sends it to the ticket processing unit 48, and makes the issuing unit 33 print out a payment sheet 60 shown in Fig. 12 (S52). In the bottom of the payment sheet 60, there is shown a bar code 61 corresponding to the code number and the amount information of the bill.

The user carries the payment sheet 60 to the POS register terminal 36 of the convenience store 14 and hands in the sheet together with the money for the indicated amount. A shop clerk of the convenience store 14 reads out the bar code 61 of the payment sheet 60 with a bar code reader 36a of the POS register terminal 36 and enters the actually paid amount from the keyboard. The payment information is sent to the center server 12 through the received money information output unit 56 of the POS register terminal 36.

Upon receipt of this (S54) in the center server 12, the payment processing unit 51 confirms that the amount billed agrees with the amount for the received money, and then, registers the information indicating the charge has been paid, into the user database 42, associated with the corresponding bill (S56).

Simultaneously, the payment processing unit 51 sends the data indicating that the payment as for the corresponding bill has been completed, to the local server 18 (S58). In the local server 18, upon receipt of this, the billing information update unit 55 adds the information indicating that it has been paid, to the corresponding bill stored in the billing information database 54.

Later, the amount got by subtracting the necessary charge from the amount paid in the convenience store 14 will be transferred to the corresponding service provider from the system operator.

Instead of paying the amount billed in cash as mentioned above, the payment can be naturally made by using a credit card, a pre-paid card, and the other electric money.

Although an example of a user's selecting the service providers individually from the payment object selection screen 57 has been shown in the above, it is also possible to display all the bills as for the user.

Namely, when pushing the "confirm the bill" button in the screen of Fig. 9, after completion of the authentication procedure in the authenticating unit 49, the bill processing unit 50 retrieves the user database 42 to extract all the bills (not paid) concerned with the user.

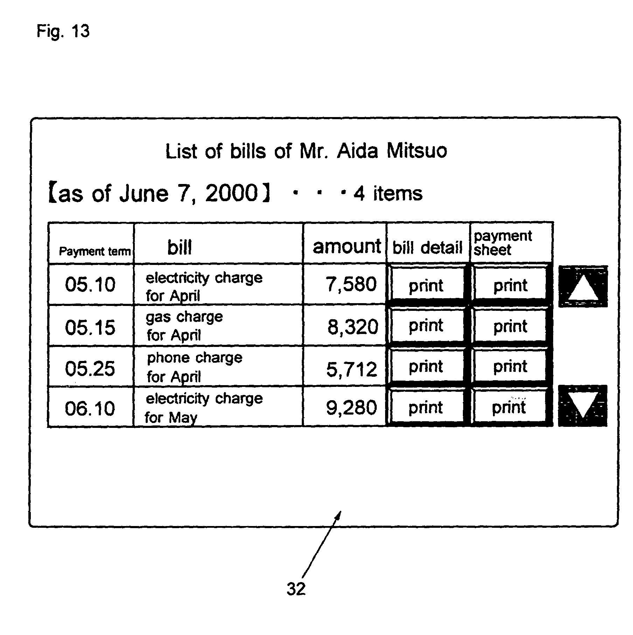

This extracted result is sent to the terminal 16 and shown on the display 32 in a list form as illustrated in Fig. 13.

Since all the bills (not paid) as for the user at the current point are listed, the user can select the payment object at this time after checking the validity and the amount of each bill. Needless to say, it is possible to print out the same specification as the above by pushing the "print" button shown in the specification column of each bill.

The user who has selected the payment object concretely can push the "print" button shown in the payment sheet of the corresponding bill and print out the payment sheet 60, so as to accomplish the payment according to the same procedure as the above.

As mentioned above, instead of printing out the payment sheet 60 corresponding to each bill and paying the money for the amount billed at the cash register in the convenience store 14, it is also possible to directly pay the money through the terminal 16.

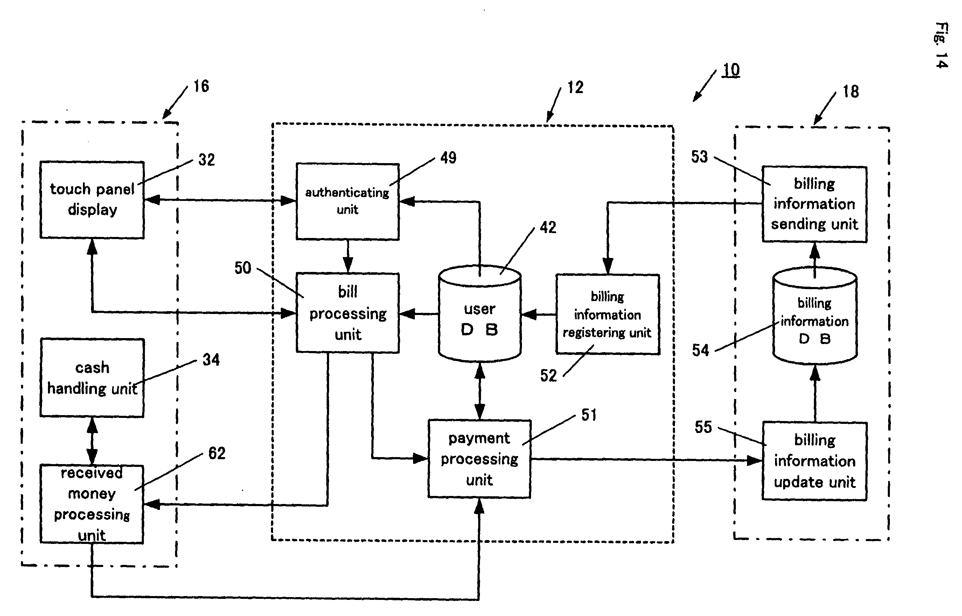

Fig. 14 is a block diagram showing the functional structure in this case, and the terminal 16 includes a touch panel display 32, a cash handling unit 34, and a received money processing unit 62. The received money processing unit 62 can be realized by the CPU 26 of the terminal 16 executing the predetermined processing according to the OS and the dedicated program. The cash handling unit 34 includes a sensor for reading out the amount of the bills and the coins injected from the money slot, a function of supplying the money information read out to the received money processing unit 62, and a function of discharging change from a return slop according to an instruction from the received money processing unit 62.

The center server 12 has the authenticating unit 49, the user database 42, the bill processing unit 50, the payment processing unit 51, and the billing information registering unit 52, similarly to the above.

Further, the local server 18 of a service provider also has the billing information sending unit 53, the billing information database 54, and the billing information update unit 55 similarly to the above.

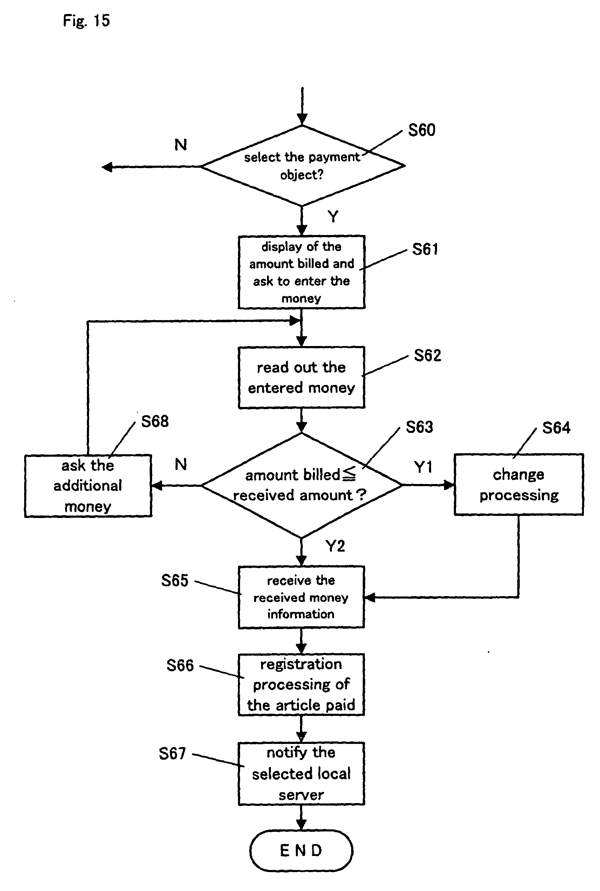

Next, the processing procedure in the case where a user pays some charge will be described according to the flow chart of Fig. 15. Also in this case, since the processing procedure up to the user authentication processing and the processing of the detail information is identical to the processing procedure (S30 to S48 in Fig. 8), the overlapped description is omitted here.

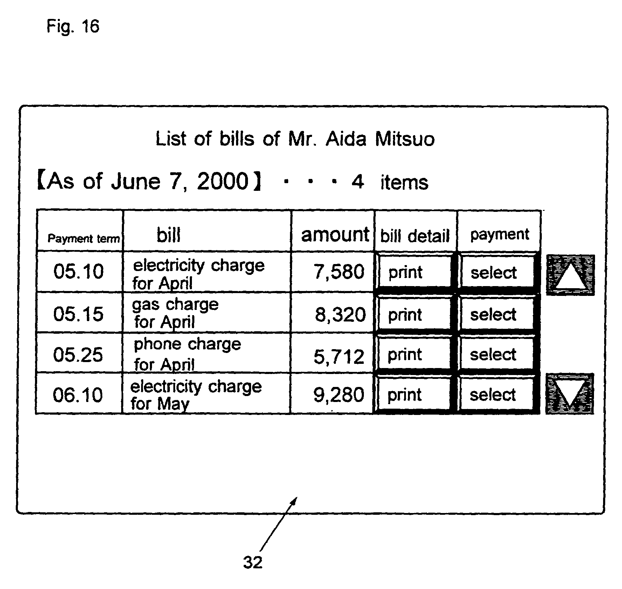

When a user clears the authentication procedure, a list of the bills shown in Fig. 16 appears on the display 32. Namely, the column of pay is provided instead of the column of the payment sheet and the "select" button is provided instead of the "print" button, in the respective bills.

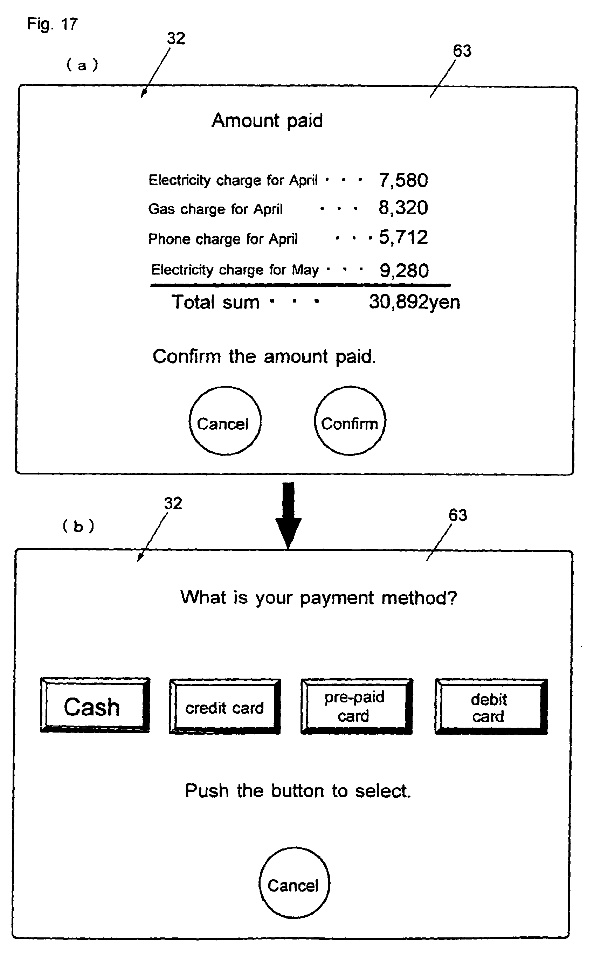

As for any bill of the list, when pushing the "select" button to select the payment object (S60), the bill processing unit 50 sends a message asking a user to confirm the selected bill and its amount, to the terminal 16 (S61), and a confirmation screen 63 shown in Fig. 17(a) appears on the display 32. At this time, when the user selects a plurality of bills, the bill processing unit 50 calculates the total amount of the respective bill and displays the calculation result on a screen as illustrated.

When the user pushes the "confirm" button, the screen turns to a payment method selection screen, as illustrated in Fig. 17(b), asking the user to select the payment method. Here, when the user touches the "cash" button, a message asking the user to enter the cash into the money slot of the terminal 16 appears on a screen together with the cash entering image, although it is not illustrated.

According to this, the user enters bills or coins into the cash slot provided in the cash handling unit 34 of the terminal 16, the sensor of the cash handling unit 34 reads out the entered amount (S62) and supplies the amount information to the received money processing unit 62. In the received money processing unit 62, whether the entered mount is beyond the total amount or not is checked (S63). When it is beyond the total amount, the unit 62 issues a change discharging instruction to the cash handling unit 34, so as to discharge the necessary change from the return slot of the terminal 16 (S64) and supplies the received money information to the payment processing unit 51. Needless to say, also when the entered amount and the total amount are in one accord, it supplies the received money information to the payment processing unit 51.

Upon receipt of this (S65), the payment processing unit 51 confirms that the received amount agrees with the billed amount, and then, it registers the paid article information into the user database 42 (S66).

Simultaneously, the payment processing unit 51 sends the data indicating the payment as for the corresponding bill has been made, to the local server 18 (S67). Upon receipt of this, in the local server 18, the billing information update unit 55 adds the information that the bill stored in the billing information database 54 has been paid to the data.

Also in this case, later, the amount got by subtracting a necessary charge from the amount paid through the terminal 16 will be transferred to the corresponding service provider from the system operator.

When the money a user entered is less than the necessary amount, needless to say, a message to this effect appears on the display 32, inducing the user to enter the additional amount of money (S68).

Instead of directly paying the money through the terminal 16 as mentioned above, it is also possible to make a payment by using a credit card, a pre-paid card, and a debit card.

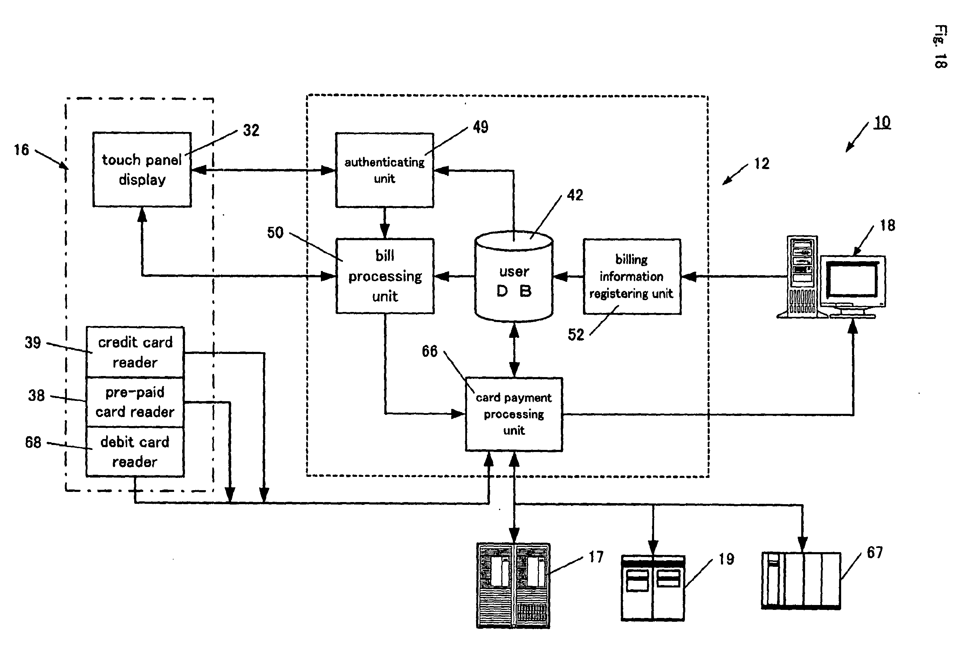

Fig. 18 is a block diagram showing the functional structure in this case, and the terminal 16 includes the touch panel display 32, a credit card reader 39, a pre-paid card reader 38, and a debit card reader 68. Each of the credit card reader 39, the pre-paid card reader 38, and the debit card reader 68 has a sensor for reading out the card information recorded in a card and supplying it outward.

The center server 12 includes the authenticating unit 49, the user database 42, the bill processing unit 50, a card payment processing unit 66, and the billing information registering unit 52. The card payment processing unit 66 can be realized by the CPU of the center server 12 executing the predetermined processing according to the OS and the dedicated program.

The local server 18 of a service provider includes the billing information sending unit 53, the billing information database 54, and the billing information update unit 55, similarly to the above (they are not illustrated).

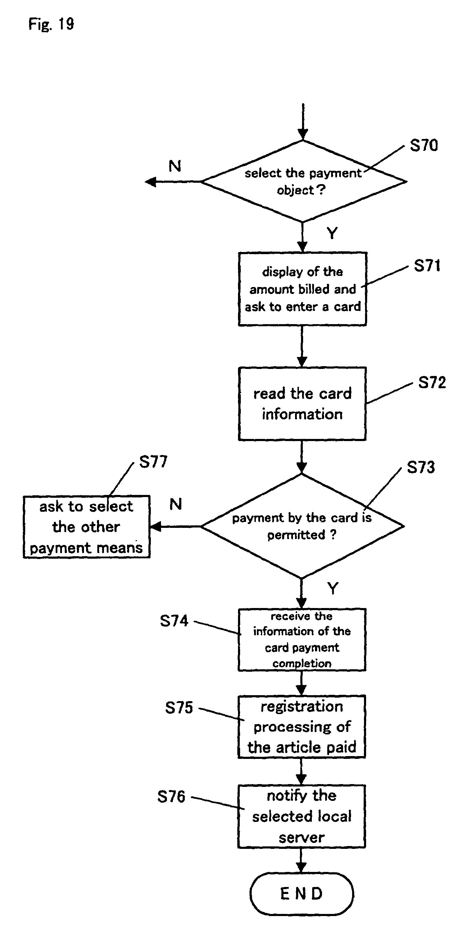

The processing procedure in the case where a user pays the charge by a credit card will be described according to the flow chart of Fig. 19. Also in this case, since the processing procedure up to the user authentication processing and the processing of the detail information is identical to the above processing procedure (S30 to S48 in Fig. 8), the overlapped description is omitted here.

When a user clears the authentication procedure, a list of the bills shown in Fig. 16 appears on the display 32. As for any bill of the list, when pushing the "select" button to select the payment object (S70), the bill processing unit 50 sends a message asking the user to confirm the selected bill and its amount, to the terminal 16 (S71), and the confirmation screen 63 shown in Fig. 17(a) appears on the display 32.

When the user pushes the "confirm" button, the screen turns to the payment method selection screen, as illustrated in Fig. 17(b), asking the user to select the payment method. Here, when the user touches the "credit card" button, a message asking the user to enter a credit card into a credit card slot of the terminal 16 appears on a screen together with the card inserting image, although it is not illustrated.

According to this, the user enters the credit card into the credit card slot of the terminal 16, the sensor of the credit card reader 39 reads out the card information such as the card number and the validity recorded in the card (S72) and supplies it to the card payment processing unit 66.

Upon receipt of this, the card payment processing unit 66 sends the credit card information and the payment amount information to the computer system 17 of a credit card company, so as to check whether the pay by card is permitted or not (S73). When receiving the payment completion information from the computer system 17 (S74), it registers the information that the bill has been paid, into the user database 42 (S75).

Simultaneously, the card payment processing unit 66 sends the data indicating that the payment as for the corresponding bill has been completed, to the local server 18 (S76). In the local server 18, upon receipt of this, the billing information update unit 55 adds the information that it has been paid, to the corresponding bill stored in the billing information database 54.

In this case, later, the payment amount will be transferred from the credit card company to the operator of the system 10. The amount got by subtracting a necessary charge from this amount will be transferred to the corresponding service provider from the system operator.

When the payment by a credit card is rejected due to the expiration, a message requesting a user to select another payment means is sent to the terminal 16 (S77). The user can continue the payment procedure by means of cash, a pre-paid card, a debit card, or a credit card of another company.

Also when a user selects the payment by a pre-paid card, since the payment procedure is performed in the substantially same procedure as in the case of the above credit card payment, the description will be hereafter made mainly about the characteristic points of the pre-paid card payment.

At first, when a user touches the "pre-paid card" in the payment method selection screen of Fig. 17(b) to select the pre-paid card payment, a message asking a user to insert a card into a pre-paid card slot of the terminal 16 appears on a screen together with the card inserting image.

When a user inserts a pre-paid card into the pre-paid card slot of the terminal 16 according to the above, the sensor of the pre-paid card reader 38 reads out the information such as the card number and the like recorded in the card and supplies it to the card payment processing unit 66.

Upon receipt of this, the card payment processing unit 66 sends the card information and the payment amount information to the computer system 19 of the pre-paid card company, so as to check whether the payment by a pre-paid card is permitted or not. When receiving the payment completion information from the computer system 19, it registers the information that the bill has been paid, into the user database 42.

Simultaneously, the card payment processing unit 66 sends the data indicating that the payment as for the corresponding bill has been completed, to the local server 18. In the local server 18, upon receipt of this, the billing information update unit 55 adds the information indicating that the bill has been paid, to the corresponding bill stored in the billing information database 54.

In this case, later, the payment amount will be transferred from the pre-paid card company to the operator of the system 10. The amount got by subtracting a necessary charge from this amount will be transferred to the corresponding service provider from the system operator.

When the payment by the pre-paid card is rejected due to the reason of insufficient funds, a message asking the user to select another payment means is sent to the terminal 16. The user can continue the payment procedure by means of cash, a credit card, another pre-paid card, or a debit card.

Also when a user selects the payment by a debit card, since the payment procedure will be performed in the substantially same procedure as in the case of the above-mentioned credit card payment and pre-paid card payment, the description will be hereafter made mainly about the characteristic point of the debit card payment.

At first, when the user touches the "debit card" button in the payment method selection screen of Fig. 17 (b) to select the debit card payment, a message asking the user to insert the card into a debit card slot of the terminal 16 and to enter the secret identification code appears on a screen together with the card inserting image.

When the user inserts the debit card into the debit card slot of the terminal 16 according to this, the sensor of the debit card reader 68 reads out the information such as the card number and the like recorded in the card and supplies it to the card payment processing unit 66. When the user enters the secret identification code (numeric values of four digits and the like) from the touch panel 32, it is sent to the card payment processing unit 66 through the bill processing unit 50.

Upon receipt of this, the card payment processing unit 66 sends the card information, the payment amount information, and the secret identification code to the computer system 67 of a bank concerned to the corresponding debit card, so as to check whether the payment by the card is permitted or not. When receiving the payment completion information from the computer system 67, it registers the information that the bill has been paid, into the user database 42.

Simultaneously, the card payment processing unit 66 sends the data indicating that the payment as for the corresponding bill has been completed, to the local server 18. In the local server 18, upon receipt of this, the billing information update unit 55 adds the information indicating the bill article stored in the billing information database 54 has been paid, to the data.

In this case, the payment amount will be transferred from the bank to the operator of the system 10. The amount got by subtracting a necessary charge from this amount will be transferred to the corresponding service provider from the system operator.

When the payment by a debit card is rejected due to the reason of insufficient funds in the account or disagreement of the secret identification code, a message asking the user to select another payment means is sent to the terminal 16. The user can continue the payment procedure by means of cash, a credit card, a pre-paid card, or another debit card.

By using this charge payment system 10, a user can confirm the number of bills and the time-limit of payment issued by the respective service providers and make a payment by the lump in the convenience store 14.

It is needless to say that a user can gain access to the web site of this system 10 through the Internet 45 from the user's personal computer 44 or portable phone 47 and that when entering the phone number and the secret identification code and clearing the authentication procedure, the user can confirm the bills and the detail information from the respective service providers any time on a screen.

Further, a user can print out the same payment sheet as shown in Fig. 12 through a printer connected to the personal computer 44.

In this case, a user may carry the payment sheet printed out to the convenience store or the financial institution as it is, to pay the indicated amount in cash or by using a credit card or a pre-paid card.

After the payment, the payment processing unit 51 of the center server 12 adds the information that the bill has been paid to the data like the above.

Alternatively, a user can complete the payment on-line through the Internet, by using a credit card, a pre-paid card, or a debit card.

For example, after selecting the payment object from the list of the bills displayed on the screen of the personal computer 44, when selecting the credit card payment, the pre-paid card payment, or the debit card payment, a Web page asking the user to enter the card information is sent from the center server 12. In reply to this, when the user returns the necessary information such as the card number and the secret identification code by entering it from the keyboard of the personal computer 44, the card payment processing unit 66 performs the checking processing on the computer system of the card company or the financial institution, and in the case of the positive information, it adds the information indicating the bill has been paid, to the data.

Similarly, a user can gain access to the web site of the center server 12 through the Internet from the portable phone 47, and after selecting the payment object from the list of the bills shown on the display of the portable phone 47, the user can accomplish the payment at this site by entering the credit card number, the pre-paid card number, the debit card number, or the secret identification code from the ten-key keyboard.

Further, a user can complete the on-line payment by paying the amount billed from the account of the financial institution such as a bank.

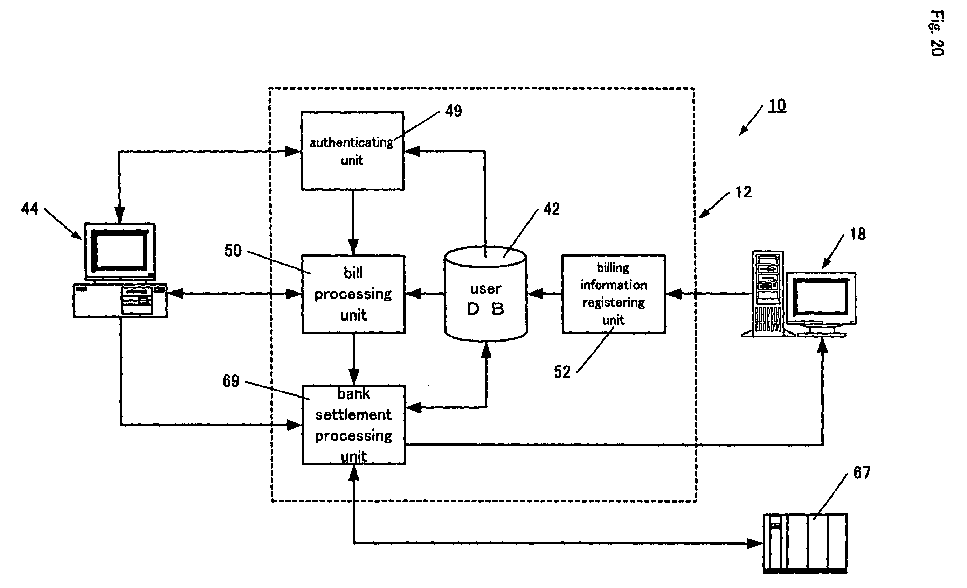

Fig. 20 is a block diagram showing the functional structure in this case, and the center server 12 includes the authenticating unit 49, the user database 42, the bill processing unit 50, a bank settlement processing unit 69, and the billing information registering unit 52. The bank settlement processing unit 69 can be realized by the CPU of the center server 12 executing the predetermined processing according to the OS and the dedicated program.

The local server 18 of a service provider includes the billing information sending unit 53, the billing information database 54, and the billing information update unit 55, similarly to the above (they are not illustrated).

The processing procedure in the case where a user transfers the payment amount into a bank's account on-line from the personal computer 44 will be described in the following.

At first, after selecting the payment object from the list of the bills displayed on the screen of the personal computer 44, the user selects the payment through a bank's account, and then, a Web page asking the user to enter the account information is sent from the center server 12 (not illustrated). In reply to this, when the user enters the necessary information such as the bank name, branch name, account number, account type, and the like from the keyboard of the personal computer 44 and returns it, the bank settlement processing unit 69 performs the checking processing as for the computer system 67 of the corresponding bank, and when the positive information is sent from the computer system 67, it adds the information indicating that the bill has been paid, to the data.

In this case, later, the payment amount will be transferred from the bank to the operator of this system 10. The amount got by subtracting a necessary charge from this amount will be transferred from the system operator to the corresponding service provider.

When the settlement through a bank' s account is rejected due to the reason of the shortage funds in the account and the like, a message asking another settlement means appears on the screen of the personal computer 44. In reply to this, the user can complete the payment procedure by means of a credit card, a pre-paid card, or the like.

When the bank account information of a user has been registered into the user database 42 in advance, it is possible to save the above trouble of entering the bank name, branch name, account number, account type, and the like every time of settlement.

Needless to say, a user can pay the amount through a bank's account on-line from the portable phone 47, according to the substantially same procedure as the above.

In the above, although the description has been made in the case where a user pays the amount through a bank' s account on-line from the user's personal computer 44, naturally it is also possible to complete the payment through a bank's account by using the terminal 16 provided in the convenience store 14, according to the same procedure.

Alternatively, the function of the terminal 16 may be built in the ATM of a bank. In this case, since the user authentication and the specification of the account information will be completed by inserting a bankbook or a cash card, or by input of the secret identification code, a user can get a more convenience.

After a user once subscribes to this system 10, when a change occurs in the registration information (for example, phone number), the changing procedure as for all the service providers can be completed by performing the changing procedure on the center server 12.

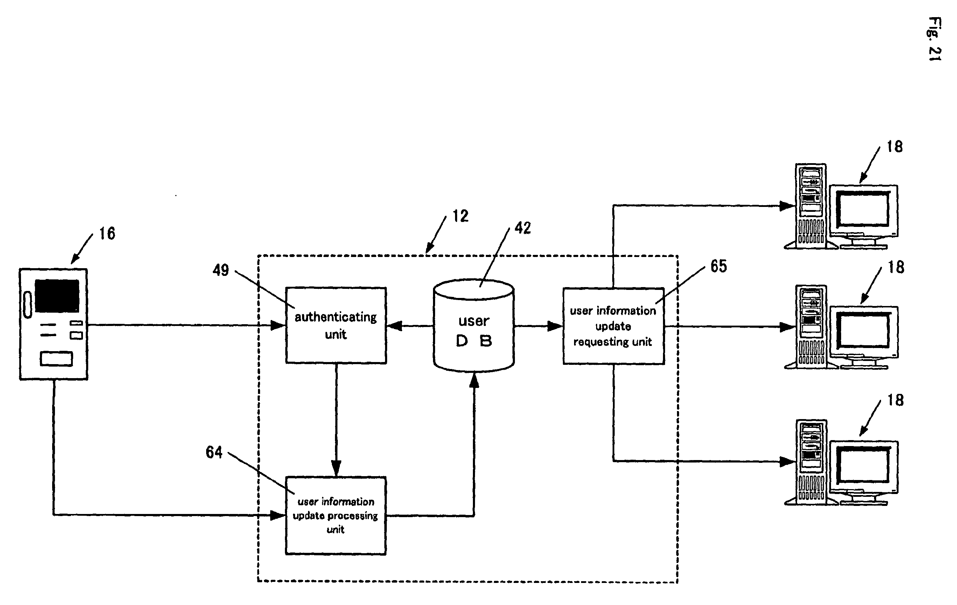

Fig. 21 is a block diagram showing the functional structure in this case, and the center server 12 includes the authenticating unit 49, the user database 42, a user information update processing unit 64, and a user information update requesting unit 65.

The user information update processing unit 64 and the user information update requesting unit 65 may be realized by the CPU 30 of the computer forming the center server 12 executing the predetermined processing according to the OS and the dedicated program.

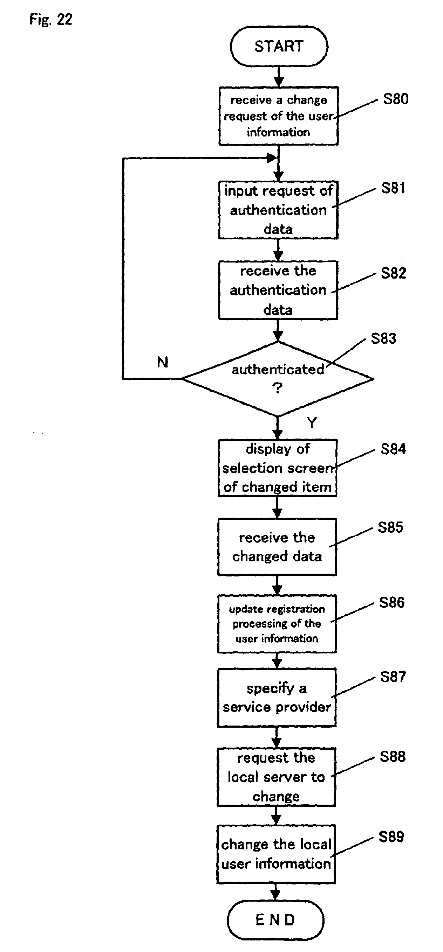

The processing procedure in the case where a user registers a change of his or her own phone number will be described according to the flow chart of Fig. 22.

At first, the user gains access to the center server 12 from the terminal 16 provided in the convenience store 14 and selects the "change of user registration information" from the service menu (not illustrated).

Upon receipt of this (S80), the authenticating unit 49 of the center server 12 sends the data for authentication screen shown in Fig. 11 to the terminal, asking the user to enter the authentication data (S81).

In reply to this, when the user pushes the ten-key keyboard 59 on the touch panel 32 so as to enter his or her phone number and secret identification code, the authenticating unit 49 of the center server 12, upon receipt of this (S82), retrieves the information from the user database 42 with the entered phone number as a key and the user authentication is performed by comparison between the entered secret identification code and the registered secret identification code (S83).

When the positive result is obtained here, since a screen for selecting the data item to be changed is displayed (S84), the user enters his or her new phone number.

When the center server 12 receives this change data (S85), the user information update processing unit 64 rewrites the registered information within the user database 42 (S86).

As mentioned above, in case of some change in the registered items within the user database 42, the user information update requesting unit 65 is activated and the user specifies the service provider whom he or she pays the charge by using this system 10 (S87).

This time, the information requesting the change of the phone number data is sent to the local server 18 of the corresponding service provider (S88).

Upon receipt of this, in the local server 18, the user information update unit, not illustrated, is activated so as to update the phone number data within the local user database (S89).

As mentioned above, since a user has only to do the update procedure for the center server 12, to complete the update procedure for the respective service providers, this can reduce much more troubles than the case of individual update procedure.

This update processing of the registered data can be performed naturally by having access to the web site of the center server 12 through the Internet 45 from the user's personal computer 44 or portable phone 47.

The setting site of the above terminal 16 is not restricted to within the convenience store 14 but it may be provided within a supermarket or a department store, a school, a hospital, an administrative institution, or a company.

Further, it is also possible to install the function of this terminal 16 in a ticket-vending machine of a station or an ATM of a bank.

In the above, although the description has been made in the case of providing a service to a user in Japanese, it is possible to display a language selection screen on the display of the personal computer 44 or the terminal 16, and thereafter realize the screen display and the printing by the language selected by the user.

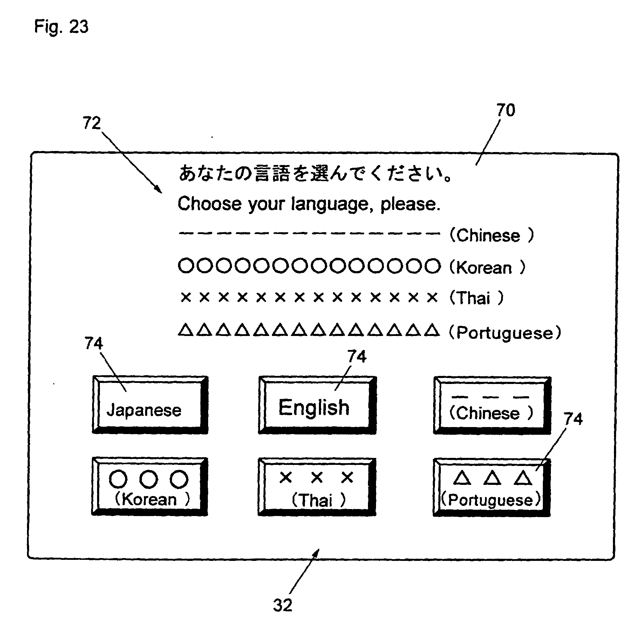

Fig. 23 shows one example of the above, where a language selection screen 70 is shown on the display 32 of the terminal 16.

In the language selection screen 70, there is a message group 72 inducing a user to select his or her language, written in Japanese and the other languages (English, Chinese, Korean, Thai, Portuguese, and so on). Further, buttons 74 for selecting the respective languages are shown there.

Here, when a user selects, for example, the "English" button 74, all the screens will be shown in English, including the payment object selection screen of Fig. 9, the authentication screen of Fig. 10, the list of bills of Fig. 11, the payment sheet of Fig. 12, the list of bills of Fig. 13, the list of bills of Fig. 16, and the billed amount confirmation screen and the payment method selection screen of Fig. 17.

In order to realize this, it is necessary to prepare a form and a sentence of message for display and a form and a sentence of message for printing corresponding to each language in advance and set up the font set corresponding to each language.

### Industrial Applicability

In the payment sheet issuing system and charge payment system according to the invention, since bills from respective service providers are stored in the storing means, associated with respective users, it is possible for a user to confirm various bills for his or her self at once by requesting a display of the bills through the terminal. Therefore, it has the advantage that a user can manage the payment terms and make a payment plan as for various kinds of bills at ease.

Further, if a user desires the payment, the payment sheet copy as for the corresponding bill can be printed and issued at that site from an issuing unit, and therefore, a service provider can save the trouble and the cost of mailing the payment sheets to the respective users. Moreover, advantageously, a user doesn't have to keep the payment sheet until the due-date for payment.

Alternatively, payment can be completed by injecting cash into cash handling means, or by providing a function of completing the payment by means of a credit card, a pre-paid cart, or a debit card, or through a bank's account, issue of the payment sheet itself can be saved.

## Claims

1. A payment sheet issuing system comprising:
storing means for storing billing information for each user which is sent from a server of a service provider, while associating the billing information with attribute information of the user;
means for searching within the storing means to extract a bill for a user and sending the bill to a terminal when a display request of the bill is issued from the terminal operated by the user;
issuing means; and
means for supplying necessary information to the issuing means, so as to print out a payment sheet corresponding to a specified bill when information for selecting the bill is supplied from the terminal.

2. A charge payment system comprising:
storing means for storing billing information for each user which is sent from a server of a service provider, while associating the billing information with attribute information of the user;
means for searching within the storing means to extract a bill for a user and sending the bill to a terminal when a display request of the bill is issued from the terminal operated by the user;
issuing means;
means for supplying necessary information to the issuing means, so as to print out a payment sheet corresponding to a specified bill when information for selecting the bill is supplied from the terminal;
means for supplying information indicating that the bill has been paid according to the payment sheet; and
means for processing the bill stored in the storing means as already-paid item when receiving the payment completion information.

3. A charge payment system comprising:
storing means for storing billing information for each user which is sent from a server of a service provider, while associating the billing information to attribute information of the user;
means for searching within the storing means to extract a bill for a user and sending the bill to a terminal when a display request of the bill is issued from the terminal operated by the user;
means for sending a message inducing a user to enter money for the amount of a specified bill, to the terminal, when information for selecting the bill is supplied from the terminal;
cash handling means;
means for recognizing the amount of the money entered into the cash handling means and supplying information indicating that the money for the above amount has been entered; and
means for processing the bill stored in the storing means as already-paid item when receiving the above information of the cash payment completion.

4. A charge payment system comprising:
storing means for storing billing information for each user which is sent from a server of a service provider, while associating the billing information to attribute information of the user;
means for searching within the storing means to extract a bill for a user and sending the bill to a terminal when a display request of the bill is issued from the terminal operated by the user;
means for sending a message inducing a user to pay the amount of a specified bill, to the terminal, when information for selecting the bill is supplied from the terminal;
card information input means for entering credit card information or pre-paid card information;
means for sending the card information and amount information to a computer system of a card company, so as to check whether a payment by the card is permitted or not, when receiving the credit card information or the pre-paid card information through the card information input means;
means for processing the bill stored in the storing means as already-paid item when information of payment completion is sent from the computer system.

5. A charge payment system comprising:
storing means for storing billing information for each user which is sent from a server of a service provider, while associating the billing information to attribute information of the user;
means for searching within the storing means to extract a bill for a user and sending the bill to a terminal when a display request of the bill is issued from the terminal operated by the user;
means for sending a message inducing a user to pay the amount of a specified bill, to the terminal, when information for selecting the bill is supplied from the terminal;
card information input means for entering debit card information;
input means for entering a user's secret identification code;
means for sending card information, the secret identification code, and amount information to a computer system of a financial institution, so as to check whether a payment by the debit card is permitted or not when receiving the card information and the secret identification code through the input means; and
means for processing the bill stored in the storing means as already-paid item when information of payment completion is sent from the computer system.

6. A charge payment system comprising:
storing means for storing billing information for each user which is sent from a server of a service provider, while associating the billing information to attribute information of the user;
means for searching within the storing means to extract a bill for a user and sending the bill to a terminal when a display request of the bill is issued from the terminal operated by the user;
means for sending a message inducing a user to pay the amount of a specified bill, to the terminal, when information for selecting the bill is supplied from the terminal;
means for entering a user's secret identification code in a financial institution where the user has an account;
means for sending the entered secret identification code, amount information, and user's account information to a computer system of the financial institution, so as to check whether a payment through account transfer is permitted or not; and
means for processing the bill stored in the storing means as already-paid item when information of payment completion is sent from the computer system.

7. The charge payment system, according to any one of Claims 2 to 6, comprising:
storing means for storing detail information about each bill; and
means for searching within the storing means to extract the detail information about a specified bill and sending the above information to the terminal when a display request of the detail information about the bill is issued from the terminal.

8. The charge payment system, according to any one of Claims 2 to 7, comprising
means for calculating a total sum of bills and sending the total to the terminal when information for selecting the bills is issued from the terminal.

9. A charge payment system, according to any one of Claims 2 to 8, comprising
means for searching within the storing means to extract a bill concerned to a specified service provider, of the bills for the user and sending the same bill to the terminal when information for selecting the service provider is issued from the terminal.

10. The charge payment system, according to any one of Claims 2 to 9, comprising:
means for sending user's attribute information entered from the terminal to a server of a selected service provider, so as to check whether the user registration is possible or not, when a new user registration request together with a request for selecting the service provider is supplied from the terminal; and
means for storing the user into a predetermined storing means while associating the user with the service provider when a positive reply is obtained in the above.

11. The charge payment system, according to any one of Claims 2 to 10, comprising:
means for updating attribute information entered from the terminal in the storing means when a request for changing the user's attribute information is issued from the terminal; and
means for sending the changed attribute information to a server of a service provider selected by the user and requesting update of the user information stored in the storing means managed by the server of the service provider.

12. The charge payment system, according to any one of Claims 2 to 11, comprising:
means for displaying a language selection screen provided with a message and a select button requesting selection of a specified language, on the user's terminal; and
means for representing at least a bill for the user in the language selected by the user when information for selecting the specified language is supplied from the terminal.
